(19) **Europäisches Patentamt European Patent Office Office européen des brevets**

(11) **EP 4 195 662 B1**

(12) **EUROPEAN PATENT SPECIFICATION**

(45) Date of publication and mention of the grant of the patent:
**09.10.2024 Bulletin 2024/41**

(21) Application number: **20949751.0**

(22) Date of filing: **18.08.2020**

(51) International Patent Classification (IPC):
**H04N 9/73** (2023.01)    **H04N 1/60** (2006.01)

(52) Cooperative Patent Classification (CPC):
**H04N 1/6052; H04N 1/6077; H04N 1/6086; H04N 23/88**

(86) International application number:
**PCT/CN2020/109722**

(87) International publication number:
**WO 2022/036539 (24.02.2022 Gazette 2022/08)**

(54) **COLOR CONSISTENCY CORRECTION METHOD AND DEVICE FOR MULTIPLE CAMERAS**

**VERFAHREN UND VORRICHTUNG ZUR KORREKTUR DER FARBKONSISTENZ FÜR MEHRERE KAMERAS**

**PROCÉDÉ ET DISPOSITIF DE CORRECTION DE COHÉRENCE DE COULEUR POUR DE MULTIPLES CAMÉRAS**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.06.2023 Bulletin 2023/24**

(73) Proprietor: **Huawei Technologies Co., Ltd. Longgang**
**Shenzhen, Guangdong 518129 (CN)**

(72) Inventors:
 • **WANG, Yuehong**
  **Shenzhen, Guangdong 518129 (CN)**
 • **ZHENG, Bingkun**
  **Shenzhen, Guangdong 518129 (CN)**

 • **YIN, Xuanwu**
  **Shenzhen, Guangdong 518129 (CN)**

(74) Representative: **Gill Jennings & Every LLP**
 **The Broadgate Tower**
 **20 Primrose Street**
 **London EC2A 2ES (GB)**

(56) References cited:
 **CN-A- 103 796 003      CN-A- 103 796 003**
 **CN-A- 105 979 238      CN-A- 105 979 238**
 **CN-A- 106 131 527      CN-A- 106 131 527**
 **CN-A- 109 218 561      JP-A- 2007 323 587**
 **US-A1- 2009 147 100      US-A1- 2018 308 227**

## Description

### TECHNICAL FIELD

This application relates to the field of image processing, and in particular, to a multi-camera color consistency correction method and apparatus.

### BACKGROUND

To meet requirements of a user in aspects such as high-quality imaging, panoramas, image stitching, and recognition, usually, a plurality of cameras are used to shoot a same scene, or more products and systems are equipped with a plurality of cameras to shoot images. For example, a terminal device such as a mobile phone is equipped with a plurality of cameras with different focal lengths and different characteristics, so that a user can be provided with a high-quality image. However, due to a reason such as a difference between components, a difference between fields of view of the components, and a debugging style, images actually obtained by cameras may have a color difference. A degree of the color difference varies with changes of an illumination and a shooting scene. Therefore, in actual application, colors of images obtained by a plurality of cameras need to be adjusted in real time based on changes of the illumination, the shooting scene, and the like, so that the colors of the images of the plurality of cameras are consistent.
CN-A-103796003 describes a method and system for correcting images shot in a stereoscopic mode. The method includes the following steps: S1, the color deviation ratio of two camera modules used for stereoscopic shooting in a standard color temperature environment is acquired; S2, the color temperature of a used environment is measured, and the current color deviation ratio is determined; S3, two ways of images acquired by the two camera modules are corrected according to the current color deviation ratio.
CN-A-106131527 describes a double-camera color synchronization method and device, and a terminal. The method comprises the steps that the double cameras obtain Bayer images; the white balance gain parameters of the Bayer images are calculated, and current environment light source color temperature is obtained; a color synchronization coefficient is obtained by employing the calculated color temperature according to a color synchronization coefficient mapping table; a digital signal processor applies the color synchronization coefficient to a next Bayer image photographed by a non-reference camera.
CN-A-105979238 describes a method for controlling the global imaging consistency of multiple cameras. US-A-2018/308227 describes an image stitching method applied to an image stitching device having at least two image capturing units and an operation processing unit.

### SUMMARY

This application provides a multi-camera color consistency correction method and apparatus, to implement, under different illuminations, color consistency adjustment on images obtained by a plurality of cameras.
According to a first aspect, a multi-camera color consistency correction method as defined in claim 1 is provided. The method includes: obtaining a first image shot by a first camera and a second image shot by a second camera; determining at least one color mapping parameter from N color mapping parameters based on image information indicated by the first image, where the image information includes at least one of color information of the first image and an ambient light source of the first image, the color mapping parameter indicates a color transform relationship between an image shot by the first camera and an image shot by the second camera, the N color mapping parameters are in a one-to-one correspondence with N standard light sources, and N is a positive integer; and performing color consistency correction on the second image based on the at least one color mapping parameter, to obtain a corrected image.
Color mapping parameter calibration is performed under different standard light sources, so that a color mapping parameter corresponding to each standard light source can be obtained. In a color consistency correction process, color consistency correction is performed on the second image with reference to at least one color mapping parameter, so that real-time color correction under different illumination conditions can be implemented, and accuracy of color consistency correction can be improved.
In a possible implementation, before the determining at least one color mapping parameter from N color mapping parameters, the method further includes: determining a first calibration image and a second calibration image under each standard light source, where the first calibration image and the second calibration image are color chart images respectively generated based on spectral response curves of the first camera and the second camera; and determining, based on the first calibration image and the second calibration image, a color mapping parameter corresponding to each standard light source.
Based on spectral responses of the cameras, calibration images under different light source conditions can be generated through simulation, which reduces time costs of calibration data shooting, and reduces instability factors caused by shooting, and improves stability and accuracy of color mapping parameter calibration.

The performing color consistency correction on the second image based on the at least one color mapping parameter includes: determining a common image area of the first image and the second image; determining a color compensation parameter based on the common image area and the at least one color mapping parameter; determining a white balance compensation parameter based on the common image area; and performing color consistency correction on the second image based on the white balance parameter and the color compensation parameter.

A gray area of the second image may be corrected based on the white balance compensation parameter, and a color part of the second image may be corrected based on the color compensation parameter. Through white balance compensation and color compensation, color consistency correction can be implemented for both the gray area and the color area of the second image, thereby improving a color correction effect.

In another possible implementation, the determining a common image area of the first image and the second image includes: determining a search area based on relative positions and field-of-view ranges of the first camera and the second camera; and determining the common image area based on the search area.

When calibration information such as position information of the plurality of cameras is known, an image matching range may be determined with reference to the calibration information of the cameras, to improve image matching accuracy and search efficiency.

In another possible implementation, the determining a color compensation parameter based on the common image area and the at least one color mapping parameter includes: respectively applying the N color mapping parameters to the common image area in the second image, to obtain N third images; calculating a color difference between the common image area in the first image and each third image; determining at least one color mapping parameter based on the color difference, where the at least one color mapping parameter is at least one color mapping parameter corresponding to a third image with a smallest color difference; determining a target color mapping parameter based on the at least one color mapping parameter, where the target color mapping parameter is a weighted value of the at least one color mapping parameter; and determining the color compensation parameter based on the target color mapping parameter.

In another possible implementation, the determining a color compensation parameter based on the common image area and the at least one color mapping parameter includes: determining the ambient light source based on a white balance gain of the common image area in the first image; determining, based on the ambient light source, at least one color mapping parameter corresponding to at least one standard light source, where a difference between the at least one standard light source and the ambient light source is smallest; determining a target color mapping parameter based on the at least one color mapping parameter, where the target color mapping parameter is a weighted value of the at least one color mapping parameter; and determining the color compensation parameter based on the target color mapping parameter.

The color compensation parameter may be determined in a plurality of manners, and a plurality of related color mapping parameters may be fused based on an actual illumination condition, so that the target color mapping parameter determined in this manner is more accurate.

In another possible implementation, the color compensation parameter is the target color mapping parameter, or the color compensation parameter is a product of the target color mapping parameter and the white balance gain and a color restoration parameter of the first image.

In another possible implementation, the determining a white balance compensation parameter based on the common image area includes: separately determining weighted average values of a pixel of the common image area in the first image on three color channels or a weighted color histogram; separately determining weighted average values of a pixel of the common image area in the second image on the three color channels or a weighted color histogram; and determining the white balance compensation parameter based on the weighted average values on the three color channels or the weighted color histogram.

In another possible implementation, before the determining a white balance compensation parameter, the method further includes: dividing the common image area into M blocks based on a spatial position, color similarity, and edge information of the common image area, where M is a positive integer; and the determining a white balance compensation parameter based on the common image area includes: separately determining weighted average values of an image block of the common image area in the first image on three color channels or a weighted color histogram; separately determining weighted average values of an image block of the common image area in the second image on the three color channels or a weighted color histogram; and determining the white balance compensation parameter based on the weighted average values on the three color channels or the weighted color histogram.

The image is divided into blocks, so that calculation can be simplified and efficiency of color consistency correction can be improved.

According to a second aspect, a multi-camera color consistency correction apparatus as defined in claim 7 is provided. The apparatus includes: an obtaining module, configured to obtain a first image shot by a first camera and a second image shot by a second camera; a determining module, configured to determine at least one color mapping parameter from N color mapping parameters based on image information indicated by the first image, where the image information includes at least one of color information of the first image and an ambient light source of the first image, the color mapping parameter indicates a color transform relationship between an image shot by the first camera and an image shot by the second camera, the N color mapping parameters are in a one-to-one correspondence with N standard light sources, and N is a positive integer; and a correction module, configured to perform color consistency correction on the second image based on the at least one color mapping parameter, to obtain a corrected image.

Color mapping parameter calibration is performed under different standard light sources, so that a color mapping parameter corresponding to each standard light source can be obtained. In a color consistency correction process, color consistency correction is performed on the second image with reference to at least one color mapping parameter, so that real-time color correction under different illumination conditions can be implemented, and accuracy of color consistency correction can be improved.

In a possible implementation, before the determining at least one color mapping parameter from N color mapping parameters, the determining module is specifically configured to: determine a first calibration image and a second calibration image under each standard light source, where the first calibration image and the second calibration image are color chart images respectively generated based on spectral response curves of the first camera and the second camera; and determine, based on the first calibration image and the second calibration image, a color mapping parameter corresponding to each standard light source.

Based on spectral responses of the cameras, calibration images under different light source conditions can be generated through simulation, which reduces time costs of calibration data shooting, and reduces instability factors caused by shooting, and improves stability and accuracy of color mapping parameter calibration.

The determining module is specifically configured to: determine a common image area of the first image and the second image; determine a color compensation parameter based on the common image area and the at least one color mapping parameter; and determine a white balance compensation parameter based on the common image area; and the correction module is specifically configured to: perform color consistency correction on the second image based on the white balance parameter and the color compensation parameter.

A gray area of the second image may be corrected through white balance compensation, and a color part of the second image may be corrected through color compensation. Through white balance compensation and color compensation, color consistency correction can be implemented for both the gray area and the color area of the second image, thereby improving a color correction effect.

In another possible implementation, the determining module is specifically configured to: determine a search area based on relative positions and field-of-view ranges of the first camera and the second camera; and determine the common image area based on the search area.

When calibration information such as position information of the plurality of cameras is known, an image matching range may be determined with reference to the calibration information of the cameras, to improve image matching accuracy and search efficiency.

In another possible implementation, the determining module is specifically configured to: respectively apply the N color mapping parameters to the common image area in the second image, to obtain N third images; calculate a color difference between the common image area in the first image and each third image; determine at least one color mapping parameter based on the color difference, where the at least one color mapping parameter is at least one color mapping parameter corresponding to a third image with a smallest color difference; determine a target color mapping parameter based on the at least one color mapping parameter, where the target color mapping parameter is a weighted value of the at least one color mapping parameter; and determine the color compensation parameter based on the target color mapping parameter.

In another possible implementation, the determining module is specifically configured to: determine the ambient light source based on a white balance gain of the common image area in the first image; determine, based on the ambient light source, at least one color mapping parameter corresponding to at least one standard light source, where a difference between the at least one standard light source and the ambient light source is smallest; determine a target color mapping parameter based on the at least one color mapping parameter, where the target color mapping parameter is a weighted value of the at least one color mapping parameter; and determine the color compensation parameter based on the target color mapping parameter.

The color compensation parameter may be determined in a plurality of manners, and related color mapping parameters may be fused based on an actual illumination condition, so that the target color mapping parameter determined in this manner is more accurate.

In another possible implementation, the color compensation parameter is the target color mapping parameter, or the color compensation parameter is a product of the target color mapping parameter and the white balance gain and a color restoration parameter of the first image.

In another possible implementation, the determining module is specifically configured to: separately determine weighted average values of a pixel of the common image area in the first image on three color channels or a weighted color histogram; separately determine weighted average values of a pixel of the common image area in the second image on the three color channels or a weighted color histogram; and determine the white balance compensation parameter based on the weighted values on the three color channels or the weighted color histogram.

In another possible implementation, before the determining a white balance compensation parameter, the determining module is further configured to: divide the common image area into M blocks based on a spatial position, color similarity, and edge information of the common image area, where M is a positive integer; and separately determine weighted average values of an image block of the common image area in the first image on three color channels or a weighted color histogram; separately determine weighted average values of an image block of the common image area in the second image on the three color channels or a weighted color histogram; and determine the white balance compensation parameter based on the weighted values on the three color channels or the weighted color histogram.

The image is divided into blocks, so that calculation can be simplified and efficiency of color consistency correction can be improved.

According to a third aspect, a computer-readable medium is provided. The computer-readable medium stores program code for execution by a device, and the program code includes instructions for performing the color consistency correction method in any one of the first aspect or the implementations of the first aspect.

According to a fourth aspect, a computer program product is provided. The computer program product includes computer program code, and when the computer program code is run on a computer, the computer is enabled to perform the color consistency correction method in any one of the first aspect or the implementations of the first aspect.

According to a fifth aspect, a chip is provided. The chip includes a processor and a data interface. The processor reads, by using the data interface, instructions stored in a memory, to perform the color consistency correction method in any one of the first aspect or the implementations of the first aspect.

Optionally, in an implementation, the chip may further include a memory. The memory stores instructions. The processor is configured to execute the instructions stored in the memory. When the instructions are executed, the processor is configured to perform the color consistency correction method in any one of the first aspect or the implementations of the first aspect.

According to a sixth aspect, an apparatus is provided, including a processor and a memory. The memory is configured to store the computer program code, and when the computer program code runs on the processor, the apparatus is enabled to perform the color consistency correction method in any one of the first aspect or the implementations of the first aspect.

## BRIEF DESCRIPTION OF DRAWINGS

FIG. 1 is an application scenario according to an embodiment of this application;
FIG. 2 is a schematic flowchart of a multi-camera color consistency correction method according to an embodiment of this application;
FIG. 3 is a schematic flowchart of a color mapping parameter determining method according to an embodiment of this application;
FIG. 4 is a schematic flowchart of another color mapping parameter determining method according to an embodiment of this application;
FIG. 5 is a schematic flowchart of a second image color correction method according to an embodiment of this application;
FIG. 6 is a schematic diagram of image matching according to an embodiment of this application;
FIG. 7 is a schematic flowchart of another second image color correction method according to an embodiment of this application;
FIG. 8 is a schematic diagram of a structure of a multi-camera color consistency correction apparatus according to an embodiment of this application; and
FIG. 9 is a schematic diagram of a structure of another multi-camera color consistency correction apparatus according to an embodiment of this application.

## DESCRIPTION OF EMBODIMENTS

The following describes technical solutions in embodiments of this application with reference to accompanying drawings in embodiments of this application. It may be understood that, the described embodiments are some rather than all of embodiments of this application.

To meet requirements of a user in aspects such as high-quality imaging, panoramas, image stitching, and recognition, images shot by a plurality of cameras usually need to be processed. For example, a mobile phone, a car, a computer, or a surveillance system is usually equipped with a plurality of cameras to meet the foregoing requirements of the user. Due to a reason such as a difference between components, a difference between fields of view, and a debugging style, images actually obtained by cameras may have a color difference. A degree of the color difference varies with changes of an illumination and a scene. Therefore, in actual application, real-time adjustment needs to be performed based on the changes of the illumination and the scene.

In an existing multi-camera color correction technology, usually, an image obtained by one of a plurality of cameras is used as a main image (for example, a first image) and another image is used as an auxiliary image (for example, a second image), and parameters of the second image on three color channels are separately adjusted based on a mapping relationship between parameters of the first image on the three color channels and the parameters of the second image on the three color channels. However, such adjustment is separate processing for a parameter on each color channel. For example, a compensation component on a red (red, R) channel is calculated, and the compensation component on the R channel is applied to an R channel of the second image. When color compensation is performed on the R channel of the second image, impact of green (green, G) and blue (blue, B) channels is usually not considered. When spectrums of different cameras differ greatly, single-channel adjustment has a poor processing effect on image color consistency.

In addition, under different illumination conditions, a color mapping parameter between different cameras is usually different. The color mapping parameter indicates a color transform relationship between an image obtained by one camera (for example, a first camera) and an image obtained by another camera (for example, a second camera). In the existing multi-camera color correction technology, although different illumination conditions are considered in color mapping parameter calibration, only one parameter is considered in image color consistency adjustment. When an illumination changes, color consistency between a plurality of images cannot be adjusted.

Embodiments of this application provide a multi-camera color consistency correction method and apparatus, to implement, in different illumination environments, real-time color consistency correction of images obtained by a plurality of cameras.

Embodiments of this application may be applied to a scenario of a plurality of cameras. The plurality of cameras may be located on a same device, for example, a terminal device such as a mobile phone equipped with a plurality of cameras, or a vehicle equipped with a plurality of cameras. Alternatively, the plurality of cameras may be located on different devices. For example, cameras on a plurality of different devices are used to shoot a same scene. This is not limited in embodiments of this application.

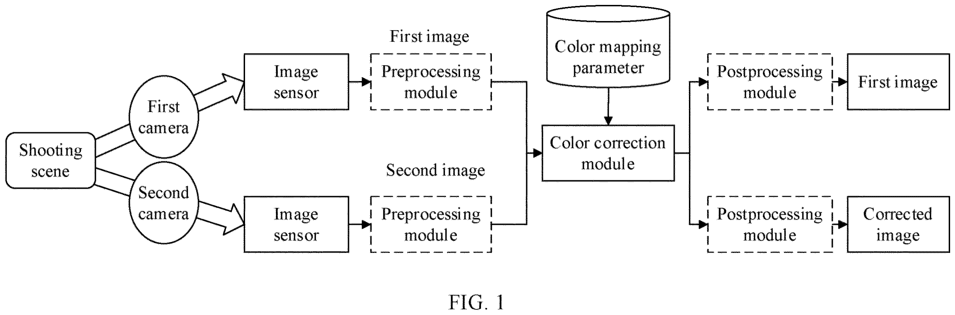

The following uses FIG. 1 as an example to describe an application scenario of embodiments of this application. As shown in FIG. 1, one of a plurality of cameras is selected as a main camera (for example, referred to as a "first camera"), and another camera is selected as an auxiliary camera (for example, referred to as a "second camera"). Light reflected by a scene is projected onto two image sensors via camera lens to form digital image signals, and the two image signals respectively pass through respective preprocessing modules. The preprocessing modules may perform, for example, operations such as defect pixel correction, black level compensation, shadow correction, white balance gain calculation, and color restoration parameter calculation. Then, the two images and related parameters enter a color correction module. An image of the first camera is used as a target image effect, and the color correction module calculates, with reference to parameters of the first image and a calibrated color mapping parameter, a color compensation parameter and a white balance compensation parameter of a second image obtained by the second camera. Subsequently, the second image is adjusted based on the color compensation parameter and the white balance compensation parameter that are obtained through calculation, to obtain a corrected image whose color is consistent with that of the first image. In some embodiments, for the first image and the second image obtained after color correction, postprocessing modules may further separately perform postprocessing, such as gamma transformation and dynamic adjustment, on the two images, to obtain the first image and the corrected image with better display effects.

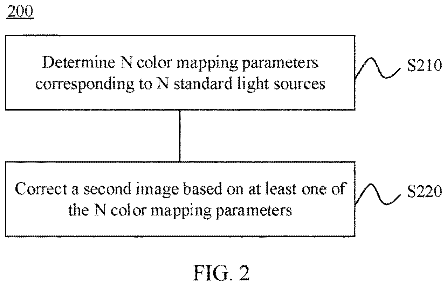

FIG. 2 is a schematic flowchart of a multi-camera color consistency correction method according to an embodiment of this application. As shown in FIG. 2, the multi-camera color consistency correction method in this embodiment of this application includes step S210 and step S220.

S210: Determine N color mapping parameters corresponding to N standard light sources.

The N standard light sources are in a one-to-one correspondence with the N color mapping parameters.

The color mapping parameter may represent a color transform relationship between two images (for example, an image 1 and an image 2). A description manner of the color mapping parameter may include a linear transformation matrix, a high-order polynomial, a neural network, or the like. For example, the image in this embodiment of this application uses an RGB color mode, and each pixel in the image is described by using values on R, G, and B color channels. In this case, the color mapping parameter may be a $3\times3$ linear transformation matrix. The color mapping parameter in a matrix form is shown in a formula (1):

$$\begin{bmatrix} R_{2i} \\ G_{2i} \\ B_{2i} \end{bmatrix} = T \times \begin{bmatrix} R_{1i} \\ G_{1i} \\ B_{1i} \end{bmatrix} = \begin{bmatrix} T_{11} & T_{12} & T_{13} \\ T_{21} & T_{22} & T_{23} \\ T_{31} & T_{32} & T_{33} \end{bmatrix} \times \begin{bmatrix} R_{1i} \\ G_{1i} \\ B_{1i} \end{bmatrix} \qquad (1)$$

$(R_{1i}\ G_{1i}\ B_{1i})$ represent values of an $i^{th}$ pixel in the image 1 on the R, G, and B color channels.

$(R_{2i}\ G_{2i}\ B_{2i})$ represent values of an $i^{th}$ pixel in the image 2 on the R, G, and B color channels.

The 3×3 matrix $T$ is a color mapping parameter and represents a color mapping relationship between the image 1 and the image 2.

When the color mapping parameter is in the matrix form in the formula (1), for N standard light source conditions, in this embodiment of this application, N matrices are respectively determined for the N light sources as color mapping parameters under different light source conditions. Specifically, the standard light sources may include light sources such as an American window spotlight (A), simulated solar light (D50), simulated blue sky daylight (D65), simulated northern average solar light (D75), simulated horizontal daylight (H), an American warm white fluorescent (U30), Europe, Japan, and Chinese store light sources (TL84), and an American cool white fluorescent (cool white fluorescent, CWF).

In this embodiment of this application, because color mapping parameter calibration is performed for different standard light sources, when color consistency correction is performed, an appropriate color mapping parameter may be selected based on different illumination conditions to perform color consistency correction on a second image, so that dynamic adaptability is good.

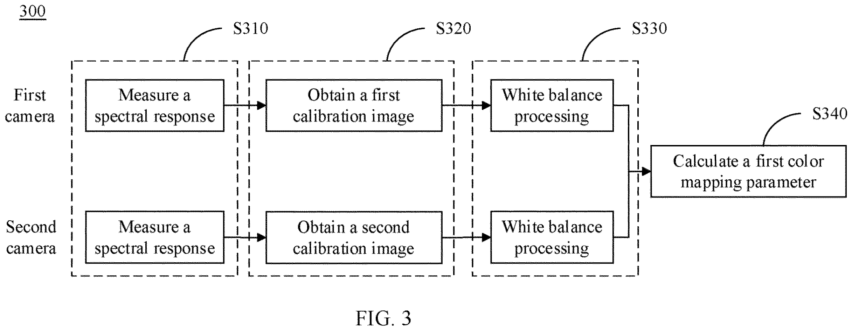

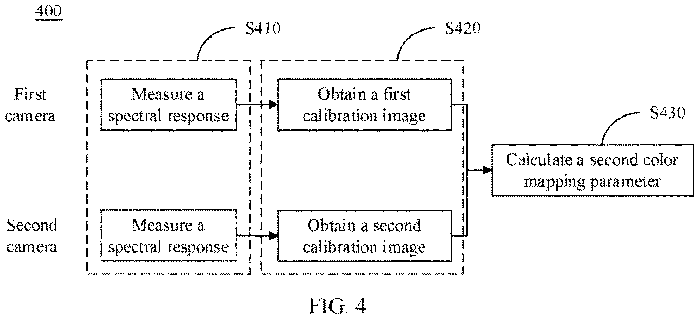

The following describes in detail a color mapping parameter calibration method with reference to FIG. 3 and FIG. 4. In this embodiment of this application, there are two color mapping parameter calibration manners. Manner 1: Perform color mapping parameter calibration based on a first calibration image and a second calibration image that are obtained after white balance, to determine a first color mapping parameter. Manner 2: Perform color mapping parameter calibration based on a first calibration image and a second calibration image that are obtained before white balance, to determine a second color mapping parameter.

FIG. 3 is a schematic flowchart of determining the first color mapping parameter in the manner 1.

S310: Measure spectral response curves of the two cameras. Spectral sensitivity of the cameras may be described based on the spectral response curves. Generally, a wavelength is used as a horizontal coordinate, and a corresponding spectral response is a vertical coordinate.

S320: Obtain calibration images. The calibration images are color chart images used to calibrate a color mapping parameter. Specifically, the calibration images may be color chart images or other reference images of the two cameras that are generated through simulation based on imaging models, the spectral response curves, light source spectrums, or 24-color chart reflection spectrums. For example, a first calibration image and a second calibration image are respectively generated based on spectral response curves of a first camera and a second camera.

It should be understood that, in step S320, the first color mapping parameter calibration method is described by using a 24-color chart as an example. In another embodiment, another color chart or another article that includes a plurality of colors and can be used for a reference image may be used for color mapping parameter calibration.

S330: Perform white balance processing on the first calibration image and the second calibration image. For example, in step S320, the first calibration image and the second calibration image are respectively generated based on the spectral response curves of the first camera and the second camera, corresponding white balance gains are respectively calculated for the two images based on color values of gray blocks in the images, and white balance processing is performed on the first calibration image and the second calibration image. In some other embodiments, a light source reference value may alternatively be calculated by using information about a current light source, and the light source reference value is applied to the two calibration images for white balance processing.

S340: Calculate the first color mapping parameter. Values corresponding to each pixel in each image on the R, G, and B color channels are obtained from each of the two calibration images obtained after the white balance. For example, $(R_{1i}^1\ G_{1i}^1\ B_{1i}^1)$ represent R, G, and B values of an $i^{th}$ pixel of the first calibration image obtained after the white balance, and $(R_{2i}^1\ G_{2i}^1\ B_{2i}^1)$ represent R, G, and B values of an $i^{th}$ pixel of the second calibration image obtained after the white balance.

In some embodiments, the first color mapping parameter $T^1$ corresponding to the light source is calculated based on $(R_{1i}^1\ G_{1i}^1\ B_{1i}^1)$ and $(R_{2i}^1\ G_{2i}^1\ B_{2i}^1)$ by using a least squares method. In some other embodiments, the first color mapping parameter corresponding to the light source may alternatively be calculated based on $(R_{1i}^1\ G_{1i}^1\ B_{1i}^1)$ and $(R_{2i}^1\ G_{2i}^1\ B_{2i}^1)$ by using another regression method.

It should be understood that in some embodiments, steps S310 and S320 may not be performed when there is no spectral response measurement instrument, and image data shot by the cameras may be directly used as the first calibration image and the second calibration image to calibrate the first color mapping parameter in step S330 and step S340.

In step S210 of this application, for each of the N standard light sources, color mapping parameter calibration is performed under each standard light source based on the method of step S310 to step S340, so that N first color mapping parameters respectively corresponding to the N standard light sources may be determined.

FIG. 4 is a schematic flowchart of determining the second color mapping parameter in the manner 2. In the manner 2, the first calibration image and the second calibration image are directly obtained based on spectral responses, and white balance processing does not need to be performed on the calibration images.

S410: Measure spectral response curves of the two cameras.

S420: Obtain calibration images.

A specific implementation method of step S410 is similar to that of step S310, a specific implementation method of step S420 is similar to that of step S320, and details are not described herein again.

S430: Calculate the second color mapping parameter. Specifically, for the first calibration image and the second calibration image that are obtained by the two cameras, values corresponding to each pixel in each image on the R, G, and B color channels are obtained. For example, ($R_{1i}^2 \; G_{1i}^2 \; B_{1i}^2$ ) represent R, G, and B values of an $i$th pixel of the first calibration image, and ($R_{2i}^2 \; G_{2i}^2 \; B_{2i}^2$ ) represent R, G, and B values of an $i$th pixel of the second calibration image.

In some embodiments, the second color mapping parameter $T^2$ corresponding to the light source is obtained based on ($R_{1i}^2 \; G_{1i}^2 \; B_{1i}^2$ ) and ($R_{2i}^2 \; G_{2i}^2 \; B_{2i}^2$ ) by using a least squares method or another regression method.

It should be understood that in some embodiments, similar to the method 300, steps S410 and S420 may not be performed when there is no spectral response measurement instrument, and images shot by the cameras may be directly used as the first calibration image and the second calibration image to calibrate the second color mapping parameter in step S430.

It should be further understood that, in the method 300, the first color mapping parameter is determined for the first camera and the second camera based on the calibration images obtained after white balance, and therefore, the first color mapping parameter does not include an adjustment component of white balance. In the method 400, the second color mapping parameter is determined for the first camera and the second camera based on the calibration images obtained before white balance, and therefore, the second color mapping parameter includes a component of white balance.

In the process of color mapping parameter calibration, calibration images under different light source conditions can be generated through simulation based on spectrums of different light sources and spectral response parameters of the camera by using color charts or other reference data, so that time costs of data shooting can be reduced. In addition, instability factors caused by shooting are reduced, and stability and accuracy of color mapping parameter calibration are improved.

It should be understood that the process, described in step S210, of calibrating the N color mapping parameters may be performed offline. After calibration of the N color mapping parameters is completed, a correspondence between the N standard light sources and the N color mapping parameters may be preset in an image processing device. When performing color consistency correction on images obtained by a plurality of cameras, the image processing device may directly use a calibrated color mapping parameter without repeated calibration.

S220: Correct the second image based on the at least one color mapping parameter.

Specifically, because the first image is used as a target image, at least one color mapping parameter may be selected based on image information indicated by the first image to perform color consistency correction on the second image, so that a color of a corrected image obtained after correction is consistent with that of the first image.

In this embodiment of this application, the correcting the second image based on at least one of the N color mapping parameters mainly includes image matching and performing color compensation and white balance compensation on the second image. In the process of determining the color mapping parameter in step S210, there are two color mapping parameter calibration manners. Therefore, correspondingly, there are also two manners in a process of performing color compensation and white balance compensation on the second image.

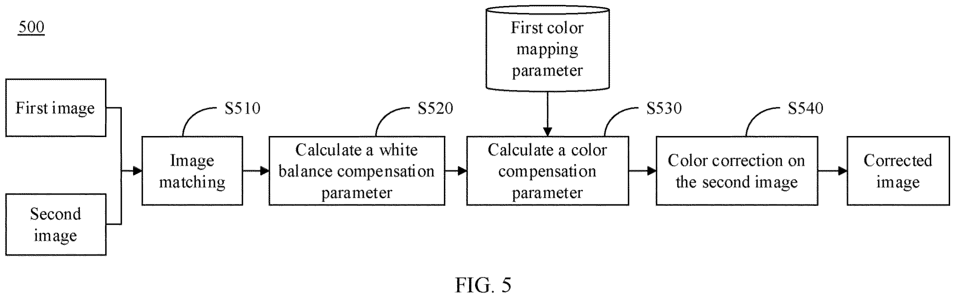

FIG. 5 is a schematic diagram of a second image color correction procedure corresponding to the color mapping parameter calibration manner 1.

S510: Image matching. A purpose of image matching is to determine a common image area of the first image and the second image, determine a color difference between the first image and the second image based on the common image area in the two images, and calculate a color compensation parameter and a white balance compensation parameter based on the color difference to perform color correction on the second image. The common image area of the two images may be determined by using a plurality of methods, for example, a method based on feature point matching, a method based on three-dimensional spatial projection, a method based on template matching, and a method based on machine learning. This is not limited in this embodiment of this application.

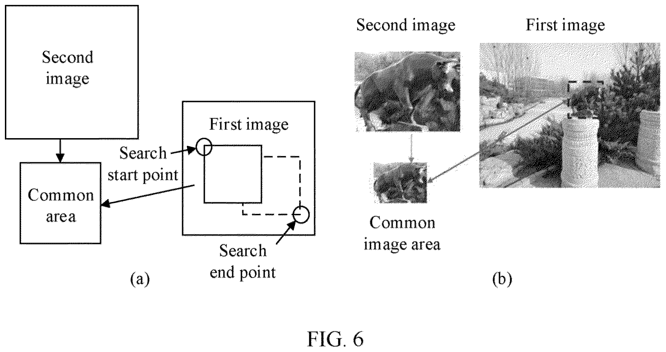

FIG. 6 is a schematic diagram of a manner of performing image matching on a first image and a second image. In some embodiments, when relative positions of the two cameras are fixed, stable and fast image matching may be achieved in combination with calibration of the cameras. As shown in FIG. 6, in an image matching process, parameters such as scale factors of the two images and offsets of the common image area on the two images are obtained based on the calibration (such as camera positions and focal lengths) of the plurality of cameras. The two images are scaled based on the parameters, and an approximate search range of the common image area is determined based on the offsets. For example, as shown in (a) in FIG. 6, a search start point and a search end point may be determined on the first image, and image matching is performed within a range of the search start point and the search end point, to finally obtain the common image area of the first image and the second image.

In some other embodiments, considering a problem of incomplete synchronization between the two images, to achieve more precise image matching, feature point-based, luminance-based, edge template matching, or other methods may be further used to implement more precise matching near the search range.

When positions of the plurality of cameras are relatively fixed, the search area of image matching can be narrowed with reference to the calibration information of the cameras, to achieve fast image matching. In addition, a template matching technology can be used to achieve a good image matching effect in a small-image scene, which can meet a real-time requirement of color consistency correction.

S520: Calculate a white balance compensation parameter of the second image relative to the first image. The white balance compensation parameter may be obtained through calculation based on color information of common image areas of the two images. This step aims to calculate a color difference between the common image areas of the two images, and calculate, based on the color difference between the common areas of the two images, the white balance compensation parameter required by the second image relative to the first image. The calculation of the white balance compensation parameter includes the following steps.

Step 1: Apply a white balance gain to the two images to obtain two images obtained after the white balance processing. Specifically, as shown in FIG. 1, in some embodiments, after passing through the image sensors, the first image obtained by the first camera and the second image obtained by the second camera enter the preprocessing modules for preprocessing. The preprocessing module may calculate a white balance gain for each image, and the color correction module performs white balance processing on the image based on the white balance gain. In subsequent steps 2 to 5, the white balance compensation parameter is calculated based on the two images obtained after the white balance processing in step 1.

Step 2: Divide, into blocks, the common image areas of the first image and the second image that are obtained after the white balance processing.

In some embodiments, to reduce a calculation amount in subsequent calculation and improve image processing efficiency, the common image area obtained through image matching in step S510 may be divided into blocks. For example, the common image area may be divided into M blocks based on a spatial position, color similarity, edge information, semantic information, and the like of the image, M is a positive integer, and subsequent calculation is performed in blocks. A manner of image block division is not limited in this embodiment of this application. A color value of each image block obtained after the block division may be represented by using average color values of all pixels of the image block on the three channels. For example, the image block includes 10 pixels, and color values of the image block on the R, G, and B channels may be represented by an R average value, a G average value, and a B average value of the 10 pixels. The color value of the image block may alternatively be represented by using a mode number, a median number, or the like of color values of all the pixels of the image block on the three channels. This is not limited in this embodiment of this application.

In some other embodiments, the common image area image may not be divided into blocks. In this case, M=1, and subsequent calculation is performed in pixels. In this case, step 2 may not be performed.

Step 3: Assign a confidence (or referred to as a "weight") to the common image area image.

In some embodiments, after the block division operation is performed on the common image area image in step 2, a confidence (or a weight) may be assigned to an image block of the common image area based on information such as luminance, saturation, and color characteristics of each image block. For example, an overexposed or oversaturated image block may be discarded. For example, a relatively small confidence (or weight) may be assigned to an overexposed or oversaturated image block, and a relatively large confidence (or weight) may be assigned to an image block close to gray.

In some other embodiments, the common image area image is not divided into blocks in step 2 (or step 2 is not performed). In this case, a confidence (or a weight) may be assigned to a pixel of the common image area image based on information such as luminance, saturation, and color characteristics of each pixel of the common image area image. For example, an overexposed or oversaturated pixel may be discarded. For example, a relatively small confidence (or weight) may be assigned to an overexposed or oversaturated pixel, and a relatively large confidence (or weight) may be assigned to a pixel close to gray.

In some other embodiments, all the image blocks of the common image area or all the pixels of the common image area may alternatively be assigned a same weight.

A manner of assigning a confidence (or a weight) and a value of the weight are not limited in this embodiment of this application.

Step 4: Calculate color features of the common image areas of the two images.

For example, weighted average values of image blocks of the common image areas of the first image and the second image on the three color channels may be calculated respectively. Specifically, in step 3, a weight is assigned to color values of each image block on the three channels. Therefore, an R-channel color feature of the common image area of the first image is a weighted average value of R values of all the image blocks, a G-channel color feature of the common image area of the first image is a weighted average value of G values of all the image blocks, and a B-channel color feature of the common image area of the first image is a weighted average value of B values of all the image blocks. The color feature of the common image area of the second image may also be calculated in a similar manner.

For example, weighted color histograms of the image blocks of the common image areas of the first image and the second image may be calculated respectively. A color histogram indicates a frequency of occurrence of a color value in an image. Specifically, in step 3, a weight is assigned to color values of each image block on the three channels. The common image area of the first image is used as an example. In an R-channel color histogram, a frequency corresponding to each R value is a weighted sum of occurrence times of corresponding R values of image blocks. For example, the common image area of the first image includes two image blocks, an image block 1 has a weight of 1, and has an R value of 255, and an image block 2 has a weight of 3, and has an R value of 255. In this case, in the R-channel weighted color histogram of the image, a frequency corresponding to the value 255 is

$$1 \times 1 + 1 \times 3 = 4.$$

For example, weighted average values of pixels of the common image areas of the first image and the second image on the three color channels may be calculated respectively. A calculation manner is similar to the calculation manner used after the block division, and details are not described again.

For example, weighted color histograms of the pixels of the common image areas of the first image and the second image may be calculated respectively. A calculation manner is similar to the calculation manner used after the block division, and details are not described again.

Step 5: Calculate the white balance compensation parameter of the second image for the first image. Specifically, a color difference may be calculated based on the color features, extracted in step 4, of the common image areas of the two images, to obtain the white balance compensation parameter of the second image relative to the first image.

For example, the weighted average values, obtained in step 4, of the common image area images of the two images on the three color channels may be compared, to calculate the white balance compensation parameter of the second image relative to the first image.

For example, the white balance compensation parameter of the second image relative to the first image may be calculated based on the weighted color histogram features, obtained in step 4, of the common image areas of the two images.

For example, the white balance compensation parameter of the second image relative to the first image may be calculated in a histogram matching manner based on the weighted color histogram features, obtained in step 4, of the common image areas of the two images.

S530: Calculate a color compensation parameter of the second image relative to the first image based on the first color mapping parameter. The color compensation parameter may be obtained through calculation based on the color information of the common image areas of the two images and the color mapping parameter. Because the first color mapping parameter determined in the manner 1 in step S210 does not include a white balance compensation component, in a second image color correction process in step S220, the white balance compensation parameter of the second image for the first image needs to be first calculated (step S520). Then, the color compensation parameter of the second image for the first image is calculated. Specifically, in this step, a color mapping parameter applicable to the scenario is determined based on at least one first color mapping parameter, so that a color difference between the two images after color compensation is performed is minimized.

In some embodiments, a global search manner may be used to search for a proper first color mapping parameter in N first color mapping parameters as a first target color mapping parameter, so that a difference between the common image area of the first image and a third image generated after the common image area of the second image is transformed by the first color mapping parameter is minimized. For example, the search may be performed based on a method shown in a formula (2):

$$T_{target}^1 = \underset{i=1,2,3,\dots,N}{argmin} \sum\nolimits_{m=1}^{M} Dis(T_i^1 \times (R_m^2, G_m^2, B_m^2), (R_m^1, G_m^1, B_m^1)) \qquad (2)$$

N represents a quantity of standard light sources. $T_i^1$ represents a first color mapping parameter corresponding to an $i^{th}$ standard light source in the $N$ standard light sources.

M represents a quantity of image blocks or pixels of the common image areas of the first image and the second image.

( $R_m^1, G_m^1, B_m^1$ ) and ( $R_m^2, G_m^2, B_m^2$ ) respectively represent values, on the three channels, of $m^{th}$ blocks or $m^{th}$ pixels in the common image area of the first image and the common image area of the second image. $T_i^1 \times (R_m^2, G_m^2, B_m^2)$ represent values, on the three channels, of an $m^{th}$ block or an $m^{th}$ pixel of the third image generated after the color mapping parameter $T_i^1$ is applied to the common image area of the second image.

The function $Dis()$ is used to calculate a difference between images. For example, an absolute value distance, a Euclidean distance, or other color difference measurement methods may be used. For example, an image color may be further transformed from an RGB space to another color space to measure the difference between the images.

Based on the formula (2), one first color mapping parameter may be selected from the N first color mapping parameters as the first target color mapping parameter, and the first target color mapping parameter may be used as the color compensation parameter of the second image, so that a difference between the second image after an action of the color compensation parameter and the first image is minimized.

In some other embodiments, alternatively, a plurality of first color mapping parameters may be selected. The plurality of first color mapping parameters are a plurality of first color mapping parameters that minimize the difference between the third image and the common image area of the first image. In addition, the plurality of color mapping parameters are fused based on a preset rule to obtain a first target color mapping parameter, and the first target color mapping parameter is used as the color compensation parameter of the second image. For example, a weighted value of the plurality of first color mapping parameters may be used as the first target color mapping parameter, and the first target color mapping parameter may be used as the color compensation parameter of the second image.

In some other embodiments, ambient light source information of the first image may be determined based on the white balance gain of the first image in step S520, then a light source closest to an ambient light source indicated by the first image is selected from the N standard light sources based on the estimated light source information, and a first color mapping parameter corresponding to the standard light source is used as the first target color mapping parameter. The first target color mapping parameter is the color compensation parameter of the second image. Alternatively, a plurality of light sources closest to the ambient light source indicated by the first image are selected from the N standard light sources based on the estimated light source information, and a plurality of first color mapping parameters corresponding to the standard light sources are fused (for example, a weighted average value of the plurality of first color mapping parameters is obtained) as the first target color mapping parameter. The first target color mapping parameter may be used as the color compensation parameter of the second image.

It should be understood that, in the manner 1 of determining the first color mapping parameter, the first color mapping parameter is determined based on the first image and the second image that are obtained after white balance, and therefore, the first target color mapping parameter $T_{i\ target}^1$ does not include a component of white balance.

S540: Color correction on the second image. Specifically, in this step, the white balance compensation parameter calculated in step S520 and the color compensation parameter calculated in step S530 are applied to the second image, to obtain a corrected image after color correction. A color of the corrected image obtained after the color correction is performed on the second image may be consistent with that of the first image.

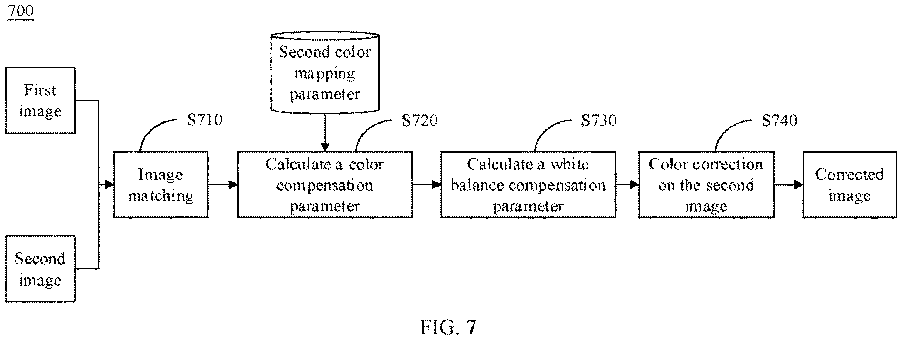

FIG. 7 is a schematic diagram of a second image color correction procedure corresponding to the color mapping parameter calibration manner 2.

S710: Image matching. A purpose of image matching is to determine a common image area of the two images for subsequent calculation of a color compensation parameter and a white balance compensation parameter. An image matching process in this step is similar to the image matching process in step S510, and details are not described herein again.

S720: Calculate a color compensation parameter of the second image relative to the first image. A process of calculating the color compensation parameter includes the following two steps.

Step 1: Calculate a second target color mapping parameter. Step 2: Calculate the color compensation parameter.

When the second target color mapping parameter is calculated in step 1, one of N second color mapping parameters may be selected as the second target color mapping parameter based on the solution described in step S530 and the formula (2). Alternatively, a plurality of second color mapping parameters are selected and fused as the second target color mapping parameter. For brevity, details are not described.

Step 2: Calculate the color compensation parameter. The color compensation parameter of the second image may be calculated based on a formula (3):

$$G = T_{target}^2 \times \begin{bmatrix} R_{gain} & 0 & 0 \\ 0 & G_{gain} & 0 \\ 0 & 0 & B_{gain} \end{bmatrix} \times CC_{mat} \qquad (3)$$

$T_{target}^2$ represents the second target color mapping parameter obtained in step 1. $\begin{bmatrix} R_{gain} & 0 & 0 \\ 0 & G_{gain} & 0 \\ 0 & 0 & B_{gain} \end{bmatrix}$ and $CC_{mat}$ respectively represent a white balance gain and a color restoration parameter of the first image, which may be obtained from the preprocessing step shown in FIG. 1.

G represents the color compensation parameter, including a white balance gain component and a color restoration parameter component.

S730: Calculate a white balance compensation parameter of the second image relative to the first image. White balance compensation calculation is performed on the second image after color compensation, to adapt to a complex and variable scenario.

Step 1: Apply the white balance gain $\begin{bmatrix} R_{gain} & 0 & 0 \\ 0 & G_{gain} & 0 \\ 0 & 0 & B_{gain} \end{bmatrix}$ and the color restoration parameter $CC_{mat}$ to the common image area of the first image. The white balance gain and the color restoration parameter of the first image may be obtained through calculation from the preprocessing step shown in FIG. 1.

Step 2: Apply the color compensation parameter G obtained in step S720 to the common image area of the second image.

Step 3: Calculate the white balance compensation parameter based on a processed common area, obtained in step 1, of the first image and a processed common area, obtained in step 2, of the second image. A white balance compensation calculation manner is similar to the method described in step S520. To avoid repetition, details are not described again.

In some other embodiments, step S730 may alternatively be implemented by performing the following steps:

Step 1: Apply $T_{target}^2$ to the common image area of the second image.

Step 2: Calculate the white balance compensation parameter based on the common image area of the first image before white balance and a processed common image area, obtained in step 1, of the second image. A white balance compensation amount in the scene may be dynamically adjusted by determining an overall color difference between the common area of the first image before white balance and the common area, obtained after transform by the color mapping parameter, of the second image through comparison. A manner of calculating the white balance compensation parameter is similar to the method described in step S520. To avoid repetition, details are not described again.

S740: Color correction on the second image. Specifically, in this step, the color compensation parameter calculated in step S720 and the white balance compensation parameter calculated in step S730 are applied to the second image, to obtain a corrected image after color correction. A color of the corrected image obtained after the color correction is performed on the second image may be consistent with that of the first image.

In this embodiment of this application, color consistency correction on the second image includes color compensation and white balance compensation, and the white balance compensation and the color compensation may be respectively performed based on the white balance compensation parameter and the color compensation parameter. The white balance compensation corrects a gray area in the image for consistency, and the color compensation corrects a color area in the image for consistency. With the two corrections combined, a good correction effect can be achieved for both the gray area and the color area.

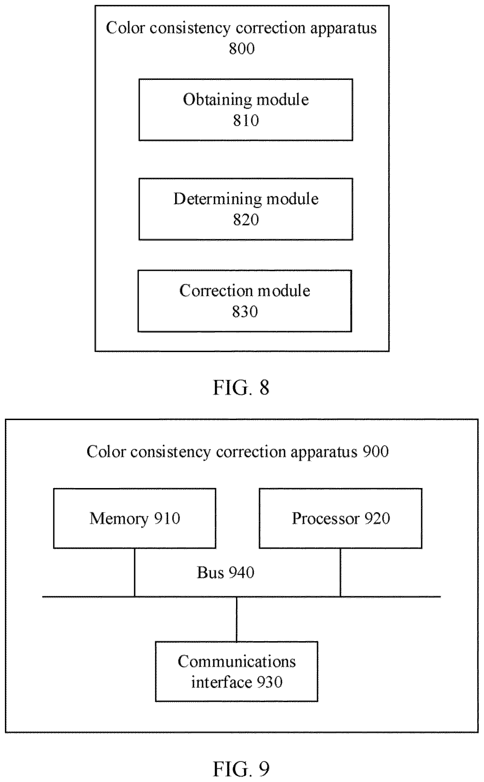

FIG. 8 is a schematic diagram of a multi-camera color consistency correction apparatus according to an embodiment of this application. As shown in FIG. 8, the multi-camera color consistency correction apparatus in this embodiment of this application includes an obtaining module 810, a determining module 820, and a correction module 830.

The obtaining module 810 is configured to obtain a first image shot by a first camera and a second image shot by a second camera.

The determining module 820 is configured to determine at least one color mapping parameter from N color mapping parameters based on image information indicated by the first image, where the image information includes at least one of color information of the first image and an ambient light source of the first image, the color mapping parameter indicates a color transform relationship between an image shot by the first camera and an image shot by the second camera, and the N color mapping parameters are in a one-to-one correspondence with N standard light sources.

The correction module 830 is configured to perform color consistency correction on the second image based on the at least one color mapping parameter, to obtain a corrected image. A color of the corrected image is consistent with that of the first image.

In some embodiments, the determining module 820 and the correction module 830 may implement functions of determining a color mapping parameter and performing color consistency correction on a second image based on the color mapping parameter in step S220 in the method 200, and specifically, may be configured to implement the color consistency correction method 500 and method 700 shown in FIG. 5 to FIG. 7. For specific functions and beneficial effects of the determining module 820 and the correction module 830, refer to the descriptions in the foregoing methods. For brevity, details are not described herein again.

In some embodiments, the color consistency correction apparatus shown in FIG. 8 may implement a function of the correction module shown in FIG. 1.

In some embodiments, the determining module 820 may be further configured to determine a color mapping parameter in the application scenario shown in FIG. 1, that is, may implement the function of determining a color mapping parameter in step S210 in the method 200. Specifically, the determining module 810 may be configured to implement steps in the color mapping parameter calibration method 300 shown in FIG. 3, and implement steps in the color mapping parameter calibration method 400 shown in FIG. 4. In this case, for specific functions and beneficial effects of the determining module 820, refer to the descriptions in the foregoing methods. For brevity, details are not described herein again.

It should be understood that the color consistency correction apparatus 800 shown in FIG. 8 includes only the obtaining module 810, the determining module 820, and the correction module 830. In another embodiment, the color consistency correction apparatus may further include another module or component, for example, the preprocessing module and the postprocessing module shown in FIG. 1. This is not limited in this embodiment of this application.

FIG. 9 is a schematic diagram of another multi-camera color consistency correction apparatus according to an embodiment of this application. The color consistency correction apparatus 900 shown in FIG. 9 includes a memory 910, a processor 920, a communications interface 930, and a bus 940. The memory 910, the processor 920, and the communications interface 930 implement a communications connection to each other by using the bus 940.

The memory 910 may be a read-only memory (read-only memory, ROM), a static storage device, a dynamic storage device, or a random access memory (random access memory, RAM). The memory 910 may store a program. When the program stored in the memory 910 is executed by the processor 920, the processor 920 is configured to perform steps of the multi-camera color consistency correction method in this embodiment of this application, for example, perform steps shown in FIG. 2 to FIG. 7.

It should be understood that the color consistency correction apparatus shown in this embodiment of this application may be a server, for example, may be a server in a cloud, or may be a chip configured in a server in a cloud. Alternatively, the color consistency correction apparatus shown in this embodiment of this application may be an intelligent terminal, or may be a chip configured in an intelligent terminal.

The color consistency correction method disclosed in the foregoing embodiments of this application may be applied to the processor 920, or implemented by the processor 920. The processor 920 may be an integrated circuit chip and has a signal processing capability. In an implementation process, the steps in the foregoing color consistency correction method may be implemented by using a hardware integrated logical circuit in the processor 920, or by using instructions in a form of software.

The processor 920 may be a central processing unit (central processing unit, CPU), an image signal processor (image signal processor, ISP), a graphics processing unit (graphics processing unit, GPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor 920 may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory 910. The processor 920 reads the instructions in the memory 910, and completes, in combination with hardware of the processor, steps of the color consistency correction method shown in FIG. 2 to FIG. 7 in embodiments of this application.

The communications interface 930 uses a transceiver apparatus such as but not limited to a transceiver, to implement communication between the apparatus 900 and another device or a communications network.

The bus 940 may include a path through which information is transmitted between components (for example, the memory 910, the processor 920, and the communications interface 930) of the color consistency correction apparatus 900.

It should be noted that although the color consistency correction apparatus 900 shows only the memory, the processor, and the communications interface, in a specific implementation process, a person skilled in the art should understand that the color consistency correction apparatus 900 may further include another component necessary for normal operation. In addition, depending on specific requirements, a person skilled in the art should understand that the color consistency correction apparatus 900 may further include a hardware component for implementing another additional function. In addition, a person skilled in the art should understand that the color consistency correction apparatus 900 may alternatively include only components necessary for implementing embodiments of this application, but does not need to include all the components shown in FIG. 9.

An embodiment of this application further provides a computer-readable medium. The computer-readable medium stores a computer program (which may also be referred to as code or instructions), and when the computer program is run on a computer, the computer is enabled to perform the color consistency correction method in any one of the foregoing method embodiments.

An embodiment of this application further provides a chip system, including a memory and a processor. The memory is configured to store a computer program. The processor is configured to invoke and run the computer program from the memory, to enable a device or apparatus with the chip system installed performs the method in any one of the foregoing method embodiments.

The chip system may include an input circuit or interface configured to send information or data, and an output circuit or interface configured to receive information or data.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a storage medium or may be transmitted from a storage medium to another storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The storage medium may be any usable medium accessible by a computer device, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state disk (solid-state disk, SSD)), or the like.

It should be understood that "some embodiments" or "an embodiment" mentioned in the whole specification does not mean that particular features, structures, or characteristics related to the embodiment are included in at least one embodiment of this application. Therefore, "in some embodiments" or "in an embodiment" appearing throughout the specification does not refer to a same embodiment. In addition, these particular features, structures, or characteristics may be combined in one or more embodiments in any appropriate manner. It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

Terms such as "component", "module", and "system" used in this specification are used to indicate a computer-related entity, hardware, firmware, a combination of hardware and software, software, or software being executed. For example, a component may be, but is not limited to, a process that is run on a processor, a processor, an object, an executable file, a thread of execution, a program, and/or a computer. As illustrated by using figures, both a computing device and an application that is run on the computing device may be components. One or more components may reside within a process and/or a thread of execution, and a component may be located on one computer and/or distributed between two or more computers. In addition, these components may be executed by various computer-readable media that store various data structures. The components may communicate by using a local and/or remote process and based on, for example, a signal having one or more data packets (for example, data from two components interacting with another component in a local system, in a distributed system, and/or across a network such as the internet interacting with other systems by using the signal).

A person of ordinary skill in the art may be aware that, in combination with illustrative logical blocks (illustrative logical block) described in embodiments disclosed in this specification, steps (step) can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing apparatus and module, refer to a corresponding process in the foregoing method embodiments, and details are not described herein again.

In the several embodiments provided in this application, it should be understood that the disclosed apparatuses and methods may be implemented in other manners. For example, the described apparatus embodiment is merely an example. For example, division into the modules is merely logical function division and may be other division in actual implementation. For example, a plurality of modules or components may be combined or integrated into another system, or some features may be ignored or not performed.

The modules described as separate parts may or may not be physically separate, and parts displayed as modules may or may not be physical modules, may be located in one position, or may be distributed on a plurality of network modules. Some or all the modules may be selected based on an actual requirement to achieve the objectives of the solutions of the embodiments.

In addition, functional modules in embodiments of this application may be integrated into one processing unit, or each of the modules may exist alone physically, or two or more modules are integrated into one unit.

The foregoing descriptions are merely specific implementations of this application, but are not intended to limit the protection scope of this application. Therefore, the protection scope of this application shall be subject to the protection scope of the claims.

**Claims**

1. A multi-camera color consistency correction method, wherein the method comprises:

   obtaining a first image shot by a first camera and a second image shot by a second camera;
   determining (S210) at least one color mapping parameter from N color mapping parameters based on image information indicated by the first image, wherein the image information comprises at least one of color information of the first image and an ambient light source of the first image, the color mapping parameter indicates a color transform relationship between an image shot by the first camera and an image shot by the second camera, the N color mapping parameters are in a one-to-one correspondence with N standard light sources, and N is a positive integer; and
   performing (S220) color consistency correction on the second image based on the at least one color mapping parameter, to obtain a corrected image; **characterized in that** the performing color consistency correction on the second image based on the at least one color mapping parameter comprises:

   determining a common image area of the first image and the second image;
   determining a color compensation parameter for correcting a color area
   based on the common image area and the at least one color mapping parameter;
   determining a white balance compensation parameter for correcting a gray area based on the common image area; and
   performing color consistency correction on the second image based on the white balance compensation parameter and the color compensation parameter.

2. The method according to claim 1, wherein before the determining at least one color mapping parameter from N color mapping parameters, the method further comprises:

   determining a first calibration image and a second calibration image under each of the N standard light sources, wherein the first calibration image and the second calibration image are color chart images respectively generated based on spectral response curves of the first camera and the second camera; and

determining, based on the first calibration image and the second calibration image, a color mapping parameter corresponding to each of the N standard light sources.

3. The method according to claim 1, wherein the determining a common image area of the first image and the second image comprises:

determining a search area based on relative positions and field-of-view ranges of the first camera and the second camera; and

determining the common image area based on the search area.

4. The method according to any preceding claim, wherein the determining a color compensation parameter based on the common image area and the at least one color mapping parameter comprises:

respectively applying the N color mapping parameters to the common image area in the second image, to obtain N third images;

calculating a color difference between the common image area in the first image and each third image;

determining at least one color mapping parameter based on the color difference, wherein the at least one color mapping parameter is at least one color mapping parameter corresponding to a third image with a smallest color difference;

determining a target color mapping parameter based on the at least one color mapping parameter, wherein the target color mapping parameter is a weighted value of the at least one color mapping parameter; and

determining the color compensation parameter based on the target color mapping parameter.

5. The method according to any of claims 1 to 3, wherein the determining a color compensation parameter based on the common image area and the at least one color mapping parameter comprises:

determining the ambient light source based on a white balance gain of the common image area in the first image;

determining, based on the ambient light source, at least one color mapping parameter corresponding to at least one standard light source, wherein a difference between the at least one standard light source and the ambient light source is smallest;

determining a target color mapping parameter based on the at least one color mapping parameter, wherein the target color mapping parameter is a weighted value of the at least one color mapping parameter; and

determining the color compensation parameter based on the target color mapping parameter.

6. The method according to claim 4 or 5, wherein the color compensation parameter is the target color mapping parameter, or the color compensation parameter is a product of the target color mapping parameter and the white balance gain and a color restoration parameter of the first image.

7. A multi-camera color consistency correction apparatus, comprising:

an obtaining module, configured to obtain a first image shot by a first camera and a second image shot by a second camera;

a determining module, configured to determine at least one color mapping parameter from N color mapping parameters based on image information indicated by the first image, wherein the image information comprises at least one of color information of the first image and an ambient light source of the first image, the color mapping parameter indicates a color transform relationship between an image shot by the first camera and an image shot by the second camera, the N color mapping parameters are in a one-to-one correspondence with N standard light sources, and N is a positive integer; and

a correction module, configured to perform color consistency correction on the second image based on the at least one color mapping parameter, to obtain a corrected image;

**characterized in that**:

the determining module is specifically configured to:

determine a common image area of the first image and the second image;

determine a color compensation parameter for correcting a color area

based on the common image area and the at least one color mapping parameter; and
determine a white balance compensation parameter for correcting a gray area based on the common image area; and

the correction module is specifically configured to:
perform color consistency correction on the second image based on the white balance compensation parameter and the color compensation parameter.

8. The apparatus according to claim 7, wherein before the determining at least one color mapping parameter from N color mapping parameters, the determining module is specifically configured to:

Determine a first calibration image and a second calibration image under each of the N standard light sources, wherein the first calibration image and the second calibration image are color chart images respectively generated based on spectral response curves of the first camera and the second camera; and
determine, based on the first calibration image and the second calibration image, a color mapping parameter corresponding to each of the N standard light sources.

9. The method according to claim 7 or claim 8, wherein the determining module is specifically configured to:

determine a search area based on relative positions and field-of-view ranges of the first camera and the second camera; and
determine the common image area based on the search area.

10. The apparatus according to any of claims 7 to 9, wherein the determining module is specifically configured to:

respectively apply the N color mapping parameters to the common image area in the second image, to obtain N third images;
calculate a color difference between the common image area in the first image and each third image;
determine at least one color mapping parameter based on the color difference, wherein the at least one color mapping parameter is at least one color mapping parameter corresponding to a third image with a smallest color difference;
determine a target color mapping parameter based on the at least one color mapping parameter, wherein the target color mapping parameter is a weighted value of the at least one color mapping parameter; and
determine the color compensation parameter based on the target color mapping parameter.

11. The apparatus according to any of claims 7 to 9, wherein the determining module is specifically configured to:

determine the ambient light source based on a white balance gain of the common image area in the first image;
determine, based on the ambient light source, at least one color mapping parameter corresponding to at least one standard light source, wherein a difference between the at least one standard light source and the ambient light source is smallest;
determine a target color mapping parameter based on the at least one color mapping parameter, wherein the target color mapping parameter is a weighted value of the at least one color mapping parameter; and
determine the color compensation parameter based on the target color mapping parameter.

12. The apparatus according to claim 10 or 11, wherein the color compensation parameter is the target color mapping parameter, or the color compensation parameter is a product of the target color mapping parameter and the white balance gain and a color restoration parameter of the first image.

13. A multi-camera color consistency correction apparatus, comprising a processor and a memory, wherein the memory is configured to store a program, and the processor is configured to invoke and run the program from the memory to perform the method according to any one of claims 1 to 6.

14. A computer-readable storage medium, comprising a computer program, wherein when the computer program is run on a computer, the computer is enabled to perform the method according to any one of claims 1 to 6.

**Patentansprüche**

1.  Verfahren zur Korrektur der Farbkonsistenz für mehrere Kameras, wobei das Verfahren Folgendes umfasst:

    Erlangen eines ersten Bilds, das durch eine erste Kamera aufgenommen ist, und eines zweiten Bilds, das durch eine zweite Kamera aufgenommen ist;
    Bestimmen (S210) mindestens eines Farbzuordnungsparameters aus N Farbzuordnungsparametern basierend auf Bildinformationen, die durch das erste Bild angezeigt werden, wobei die Bildinformationen mindestens eines von Farbinformationen des ersten Bilds und einer Umgebungslichtquelle des ersten Bilds umfassen, der Farbzuordnungsparameter eine Farbtransformationsbeziehung zwischen einem Bild, das durch die erste Kamera aufgenommen ist, und einem Bild, das durch die zweite Kamera aufgenommen ist, anzeigt, die N Farbzuordnungsparameter in einer Eins-zu-eins-Entsprechung mit N Standardlichtquellen stehen und N eine positive Ganzzahl ist; und
    Durchführen (S220) einer Korrektur der Farbkonsistenz an dem zweiten Bild basierend auf dem mindestens einen Farbzuordnungsparameter, um ein korrigiertes Bild zu erlangen; **dadurch gekennzeichnet, dass** das Durchführen der Korrektur der Farbkonsistenz an dem zweiten Bild basierend auf dem mindestens einen Farbzuordnungsparameter Folgendes umfasst:

    Bestimmen eines gemeinsamen Bildbereichs des ersten Bilds und des zweiten Bilds;
    Bestimmen eines Farbkompensationsparameters zum Korrigieren eines Farbbereichs basierend auf dem gemeinsamen Bildbereich und dem mindestens einen Farbzuordnungsparameter;
    Bestimmen eines Weißabgleichkompensationsparameters zum Korrigieren eines Graubereichs basierend auf dem gemeinsamen Bildbereich; und
    Durchführen einer Korrektur der Farbkonsistenz an dem zweiten Bild basierend auf dem Weißabgleichkompensationsparameter und dem Farbkompensationsparameter.

2.  Verfahren nach Anspruch 1, wobei das Verfahren vor dem Bestimmen mindestens eines Farbzuordnungsparameters aus N Farbzuordnungsparametern ferner Folgendes umfasst:

    Bestimmen eines ersten Kalibrierungsbilds und eines zweiten Kalibrierungsbilds unter jeder der N Standardlichtquellen, wobei das erste Kalibrierungsbild und das zweite Kalibrierungsbild Farbtafelbilder sind, die jeweils basierend auf spektralen Verteilungsfunktionen der ersten Kamera und der zweiten Kamera erzeugt werden; und
    Bestimmen, basierend auf dem ersten Kalibrierungsbild und dem zweiten Kalibrierungsbild, eines Farbzuordnungsparameters, der jeder der N Standardlichtquellen entspricht.

3.  Verfahren nach Anspruch 1, wobei das Bestimmen eines gemeinsamen Bildbereichs des ersten Bilds und des zweiten Bilds Folgendes umfasst:

    Bestimmen eines Suchbereichs basierend auf relativen Positionen und Sichtfeldbereichen der ersten Kamera und der zweiten Kamera; und
    Bestimmen des gemeinsamen Bildbereichs basierend auf dem Suchbereich.

4.  Verfahren nach einem der vorhergehenden Ansprüche, wobei das Bestimmen eines Farbkompensationsparameters basierend auf dem gemeinsamen Bildbereich und dem mindestens einen Farbzuordnungsparameter Folgendes umfasst:

    jeweils Anwenden der N Farbzuordnungsparameter auf den gemeinsamen Bildbereich in dem zweiten Bild, um N dritte Bilder zu erlangen;
    Berechnen eines Farbunterschieds zwischen dem gemeinsamen Bildbereich in dem ersten Bild und jedem dritten Bild;
    Bestimmen mindestens eines Farbzuordnungsparameters basierend auf dem Farbunterschied, wobei der mindestens eine Farbzuordnungsparameter mindestens ein Farbzuordnungsparameter ist, der einem dritten Bild mit einem geringsten Farbunterschied entspricht;
    Bestimmen eines Zielfarbzuordnungsparameters basierend auf dem mindestens einen Farbzuordnungsparameter, wobei der Zielfarbzuordnungsparameter ein gewichteter Wert des mindestens einen Farbzuordnungsparameters ist; und
    Bestimmen des Farbkompensationsparameters basierend auf dem Zielfarbzuordnungsparameter.

5. Verfahren nach einem der Ansprüche 1 bis 3, wobei das Bestimmen eines Farbkompensationsparameters basierend auf dem gemeinsamen Bildbereich und dem mindestens einen Farbzuordnungsparameter Folgendes umfasst:

Bestimmen der Umgebungslichtquelle basierend auf einer Weißabgleichverstärkung des gemeinsamen Bildbereichs in dem ersten Bild;
Bestimmen, basierend auf der Umgebungslichtquelle, mindestens eines Farbzuordnungsparameters, der mindestens einer Standardlichtquelle entspricht, wobei ein Unterschied zwischen der mindestens einen Standardlichtquelle und der Umgebungslichtquelle am geringsten ist;
Bestimmen eines Zielfarbzuordnungsparameters basierend auf dem mindestens einen Farbzuordnungsparameter, wobei der Zielfarbzuordnungsparameter ein gewichteter Wert des mindestens einen Farbzuordnungsparameters ist; und
Bestimmen des Farbkompensationsparameters basierend auf dem Zielfarbzuordnungsparameter.

6. Verfahren nach Anspruch 4 oder 5, wobei der Farbkompensationsparameter der Zielfarbzuordnungsparameter ist oder der Farbkompensationsparameter ein Produkt aus dem Zielfarbzuordnungsparameter und der Weißabgleichverstärkung und einem Farbwiederherstellungsparameter des ersten Bilds ist.

7. Vorrichtung zur Korrektur der Farbkonsistenz für mehrere Kameras, umfassend:

ein Erlangungsmodul, das dazu konfiguriert ist, ein erstes Bild, das durch eine erste Kamera aufgenommen ist, und ein zweites Bild, das durch eine zweite Kamera aufgenommen ist, zu erlangen;
ein Bestimmungsmodul, das dazu konfiguriert ist, mindestens einen Farbzuordnungsparameter aus N Farbzuordnungsparametern basierend auf Bildinformationen, die durch das erste Bild angezeigt werden, zu bestimmen, wobei die Bildinformationen mindestens eines von Farbinformationen des ersten Bilds und einer Umgebungslichtquelle des ersten Bilds umfassen, der Farbzuordnungsparameter eine Farbtransformationsbeziehung zwischen einem Bild, das durch die erste Kamera aufgenommen ist, und einem Bild, das durch die zweite Kamera aufgenommen ist, anzeigt, die N Farbzuordnungsparameter in einer Eins-zu-eins-Entsprechung mit N Standardlichtquellen stehen und N eine positive Ganzzahl ist; und
ein Korrekturmodul, das dazu konfiguriert ist, eine Korrektur der Farbkonsistenz an dem zweiten Bild basierend auf dem mindestens einen Farbzuordnungsparameter durchzuführen, um ein korrigiertes Bild zu erlangen;
**dadurch gekennzeichnet, dass**:

das Bestimmungsmodul speziell zu Folgendem konfiguriert ist:

Bestimmen eines gemeinsamen Bildbereichs des ersten Bilds und des zweiten Bilds;
Bestimmen eines Farbkompensationsparameters zum Korrigieren eines Farbbereichs basierend auf dem gemeinsamen Bildbereich und dem mindestens einen Farbzuordnungsparameter; und
Bestimmen eines Weißabgleichkompensationsparameters zum Korrigieren eines Graubereichs basierend auf dem gemeinsamen Bildbereich; und

das Korrekturmodul speziell zu Folgendem konfiguriert ist:
Durchführen einer Korrektur der Farbkonsistenz an dem zweiten Bild basierend auf dem Weißabgleichkompensationsparameter und dem Farbkompensationsparameter.

8. Vorrichtung nach Anspruch 7, wobei das Bestimmungsmodul vor dem Bestimmen mindestens eines Farbzuordnungsparameters aus N Farbzuordnungsparametern speziell zu Folgendem konfiguriert ist:

Bestimmen eines ersten Kalibrierungsbilds und eines zweiten Kalibrierungsbilds unter jeder der N Standardlichtquellen, wobei das erste Kalibrierungsbild und das zweite Kalibrierungsbild Farbtafelbilder sind, die jeweils basierend auf spektralen Verteilungsfunktionen der ersten Kamera und der zweiten Kamera erzeugt werden; und
Bestimmen, basierend auf dem ersten Kalibrierungsbild und dem zweiten Kalibrierungsbild, eines Farbzuordnungsparameters, der jeder der N Standardlichtquellen entspricht.

9. Vorrichtung nach Anspruch 7 oder Anspruch 8, wobei das Bestimmungsmodul speziell zu Folgendem konfiguriert ist:

Bestimmen eines Suchbereichs basierend auf relativen Positionen und Sichtfeldbereichen der ersten Kamera und der zweiten Kamera; und
Bestimmen des gemeinsamen Bildbereichs basierend auf dem Suchbereich.

**10.** Vorrichtung nach einem der Ansprüche 7 bis 9, wobei das Bestimmungsmodul speziell zu Folgendem konfiguriert ist:

jeweils Anwenden der N Farbzuordnungsparameter auf den gemeinsamen Bildbereich in dem zweiten Bild, um N dritte Bilder zu erlangen;
Berechnen eines Farbunterschieds zwischen dem gemeinsamen Bildbereich in dem ersten Bild und jedem dritten Bild;
Bestimmen mindestens eines Farbzuordnungsparameters basierend auf dem Farbunterschied, wobei der mindestens eine Farbzuordnungsparameter mindestens ein Farbzuordnungsparameter ist, der einem dritten Bild mit einem geringsten Farbunterschied entspricht;
Bestimmen eines Zielfarbzuordnungsparameters basierend auf dem mindestens einen Farbzuordnungsparameter, wobei der Zielfarbzuordnungsparameter ein gewichteter Wert des mindestens einen Farbzuordnungsparameters ist; und
Bestimmen des Farbkompensationsparameters basierend auf dem Zielfarbzuordnungsparameter.

**11.** Vorrichtung nach einem der Ansprüche 7 bis 9, wobei das Bestimmungsmodul speziell zu Folgendem konfiguriert ist:

Bestimmen der Umgebungslichtquelle basierend auf einer Weißabgleichverstärkung des gemeinsamen Bildbereichs in dem ersten Bild;
Bestimmen, basierend auf der Umgebungslichtquelle, mindestens eines Farbzuordnungsparameters, der mindestens einer Standardlichtquelle entspricht, wobei ein Unterschied zwischen der mindestens einen Standardlichtquelle und der Umgebungslichtquelle am geringsten ist;
Bestimmen eines Zielfarbzuordnungsparameters basierend auf dem mindestens einen Farbzuordnungsparameter, wobei der Zielfarbzuordnungsparameter ein gewichteter Wert des mindestens einen Farbzuordnungsparameters ist; und
Bestimmen des Farbkompensationsparameters basierend auf dem Zielfarbzuordnungsparameter.

**12.** Vorrichtung nach Anspruch 10 oder 11, wobei der Farbkompensationsparameter der Zielfarbzuordnungsparameter ist oder der Farbkompensationsparameter ein Produkt aus dem Zielfarbzuordnungsparameter und der Weißabgleichverstärkung und einem Farbwiederherstellungsparameter des ersten Bilds ist.

**13.** Vorrichtung zur Korrektur der Farbkonsistenz für mehrere Kameras, umfassend einen Prozessor und einen Speicher, wobei der Speicher dazu konfiguriert ist, ein Programm zu speichern, und der Prozessor dazu konfiguriert ist, das Programm aus dem Speicher abzurufen und auszuführen, um das Verfahren nach einem der Ansprüche 1 bis 6 durchzuführen.

**14.** Computerlesbares Speichermedium, umfassend ein Computerprogramm, wobei, wenn das Computerprogramm auf einem Computer ausgeführt wird, es dem Computer ermöglicht wird, das Verfahren nach einem der Ansprüche 1 bis 6 durchzuführen.

**Revendications**

**1.** Procédé de correction de cohérence de couleur multi-caméras, dans lequel le procédé comprend :

l'obtention d'une première image prise par une première caméra et d'une deuxième image prise par une seconde caméra ;
la détermination (S210) d'au moins un paramètre de mappage de couleur parmi N paramètres de mappage de couleur sur la base des informations d'image indiquées par la première image, dans lequel les informations d'image comprennent au moins l'une parmi des informations de couleur de la première image et/ou une source de lumière ambiante de la première image, le paramètre de mappage de couleur indique une relation de transformation de couleur entre une image prise par la première caméra et une image prise par la seconde caméra, les N paramètres de mappage de couleur sont en correspondance biunivoque avec N sources de lumière standard, et N est un entier positif ; et
la réalisation (S220) d'une correction de cohérence de couleur sur la deuxième image sur la base de l'au moins un paramètre de mappage de couleur, pour obtenir une image corrigée ;
**caractérisé en ce que** la réalisation d'une correction de cohérence de couleur sur la deuxième image sur la base de l'au moins un paramètre de mappage de couleur comprend :

la détermination d'une zone d'image commune de la première image et de la deuxième image ;
la détermination d'un paramètre de compensation de couleur pour corriger une zone de couleur sur la base de la zone d'image commune et de l'au moins un paramètre de mappage de couleur ;
la détermination d'un paramètre de compensation de balance des blancs pour corriger une zone grise sur la base de la zone d'image commune ; et
la réalisation d'une correction de cohérence de couleur sur la deuxième image sur la base du paramètre de compensation de balance des blancs et du paramètre de compensation de couleur.

2. Procédé selon la revendication 1, dans lequel, avant la détermination d'au moins un paramètre de mappage de couleur parmi N paramètres de mappage de couleur, le procédé comprend également :

la détermination d'une première image d'étalonnage et d'une deuxième image d'étalonnage sous chacune des N sources de lumière standard, dans lequel la première image d'étalonnage et la deuxième image d'étalonnage sont des images de nuancier respectivement générées sur la base de courbes de réponse spectrale de la première caméra et de la seconde caméra ; et
la détermination, sur la base de la première image d'étalonnage et de la deuxième image d'étalonnage, d'un paramètre de mappage de couleur correspondant à chacune des N sources de lumière standard.

3. Procédé selon la revendication 1, dans lequel la détermination d'une zone d'image commune à la première image et à la deuxième image comprend :

la détermination d'une zone de recherche sur la base de positions relatives et de plages de champ de vision de la première caméra et de la seconde caméra ; et
la détermination de la zone d'image commune sur la base de la zone de recherche.

4. Procédé selon une quelconque revendication précédente, dans lequel la détermination d'un paramètre de compensation de couleur sur la base de la zone d'image commune et de l'au moins un paramètre de mappage de couleur comprend :

l'application respective des N paramètres de mappage de couleur à la zone d'image commune dans la deuxième image, pour obtenir N troisièmes images ;
le calcul d'une différence de couleur entre la zone d'image commune dans la première image et chaque troisième image ;
la détermination d'au moins un paramètre de mappage de couleur sur la base de la différence de couleur, dans lequel l'au moins un paramètre de mappage de couleur est au moins un paramètre de mappage de couleur correspondant à une troisième image présentant une plus petite différence de couleur ;
la détermination d'un paramètre de mappage de couleur cible sur la base de l'au moins un paramètre de mappage de couleur, dans lequel le paramètre de mappage de couleur cible est une valeur pondérée de l'au moins un paramètre de mappage de couleur ; et
la détermination du paramètre de compensation de couleur sur la base du paramètre de mappage de couleur cible.

5. Procédé selon l'une quelconque des revendications 1 à 3, dans lequel la détermination d'un paramètre de compensation de couleur sur la base de la zone d'image commune et de l'au moins un paramètre de mappage de couleur comprend :

la détermination de la source de lumière ambiante sur la base d'un gain de balance des blancs de la zone d'image commune dans la première image ;
la détermination, sur la base de la source de lumière ambiante, d'au moins un paramètre de mappage de couleur correspondant à au moins une source de lumière standard, dans lequel la différence entre l'au moins une source de lumière standard et la source de lumière ambiante est la plus petite ;
la détermination d'un paramètre de mappage de couleur cible sur la base de l'au moins un paramètre de mappage de couleur, dans lequel le paramètre de mappage de couleur cible est une valeur pondérée de l'au moins un paramètre de mappage de couleur ; et
la détermination du paramètre de compensation de couleur sur la base du paramètre de mappage de couleur cible.

6. Procédé selon la revendication 4 ou 5, dans lequel le paramètre de compensation de couleur est le paramètre de mappage de couleur cible, ou le paramètre de compensation de couleur est un produit du paramètre de mappage de couleur cible et du gain de balance des blancs et d'un paramètre de restauration de couleur de la première image.

7. Appareil de correction de cohérence de couleur multi-caméras, comprenant :

un module d'obtention, conçu pour obtenir une première image prise par une première caméra et une deuxième image prise par une seconde caméra ;
un module de détermination, configuré pour déterminer au moins un paramètre de mappage de couleur parmi N paramètres de mappage de couleur sur la base des informations d'image indiquées par la première image, dans lequel les informations d'image comprennent au moins l'une des informations de couleur de la première image et d'une source de lumière ambiante de la première image, le paramètre de mappage de couleur indique une relation de transformation de couleur entre une image prise par la première caméra et une image prise par la seconde caméra, les N paramètres de mappage de couleur sont en correspondance biunivoque avec N sources de lumière standard, et N est un entier positif ; et
un module de correction, configuré pour effectuer une correction de cohérence de couleur sur la deuxième image sur la base de l'au moins un paramètre de mappage de couleur, afin d'obtenir une image corrigée ; **caractérisé en ce que** :

le module de détermination est spécifiquement configuré pour :

déterminer une zone d'image commune de la première image et de la deuxième image ;
déterminer un paramètre de compensation de couleur pour corriger une zone de couleur sur la base de la zone d'image commune et de l'au moins un paramètre de mappage de couleur ; et
déterminer un paramètre de compensation de balance des blancs pour corriger une zone grise sur la base de la zone d'image commune ; et

le module de correction est spécifiquement configuré pour :
réaliser une correction de cohérence de couleur sur la deuxième image sur la base du paramètre de compensation de balance des blancs et du paramètre de compensation de couleur.

8. Appareil selon la revendication 7, dans lequel, avant de déterminer au moins un paramètre de mappage de couleur parmi N paramètres de mappage de couleur, le module de détermination est spécifiquement configuré pour :

déterminer une première image d'étalonnage et une deuxième image d'étalonnage sous chacune des N sources de lumière standard, dans lequel la première image d'étalonnage et la deuxième image d'étalonnage sont des images de nuancier respectivement générées sur la base de courbes de réponse spectrale de la première caméra et de la seconde caméra ; et
déterminer, sur la base de la première image d'étalonnage et de la deuxième image d'étalonnage, un paramètre de mappage de couleur correspondant à chacune des N sources de lumière standard.

9. Procédé selon la revendication 7 ou la revendication 8, dans lequel le module de détermination est spécifiquement configuré pour :

déterminer une zone de recherche sur la base de positions relatives et de plages de champ de vision de la première caméra et de la seconde caméra ; et
déterminer la zone d'image commune sur la base de la zone de recherche.

10. Appareil selon l'une quelconque des revendications 7 à 9, dans lequel le module de détermination est spécifiquement configuré pour :

appliquer respectivement les N paramètres de mappage de couleur à la zone d'image commune dans la deuxième image, pour obtenir N troisièmes images ;
calculer une différence de couleur entre la zone d'image commune dans la première image et chaque troisième image ;
déterminer au moins un paramètre de mappage de couleur sur la base de la différence de couleur, dans lequel l'au moins un paramètre de mappage de couleur est au moins un paramètre de mappage de couleur correspondant à une troisième image présentant une plus petite différence de couleur ;
déterminer un paramètre de mappage de couleur cible sur la base de l'au moins un paramètre de mappage de couleur, dans lequel le paramètre de mappage de couleur cible est une valeur pondérée de l'au moins un paramètre de mappage de couleur ; et

déterminer le paramètre de compensation de couleur sur la base du paramètre de mappage de couleur cible.

**11.** Appareil selon l'une quelconque des revendications 7 à 9, dans lequel le module de détermination est spécifiquement configuré pour :

déterminer la source de lumière ambiante sur la base d'un gain de balance des blancs de la zone d'image commune dans la première image ;

déterminer, sur la base de la source de lumière ambiante, au moins un paramètre de mappage de couleur correspondant à au moins une source de lumière standard, dans lequel la différence entre l'au moins une source de lumière standard et la source de lumière ambiante est la plus petite ;

déterminer un paramètre de mappage de couleur cible sur la base de l'au moins un paramètre de mappage de couleur, dans lequel le paramètre de mappage de couleur cible est une valeur pondérée de l'au moins un paramètre de mappage de couleur ; et

déterminer le paramètre de compensation de couleur sur la base du paramètre de mappage de couleur cible.

**12.** Appareil selon la revendication 10 ou 11, dans lequel le paramètre de compensation de couleur est le paramètre de mappage de couleur cible, ou le paramètre de compensation de couleur est un produit du paramètre de mappage de couleur cible et du gain de balance des blancs et d'un paramètre de restauration de couleur de la première image.

**13.** Appareil de correction de cohérence de couleur multi-caméras, comprenant un processeur et une mémoire, dans lequel la mémoire est configurée pour stocker un programme, et le processeur est configuré pour appeler et réaliser le programme à partir de la mémoire pour exécuter le procédé selon l'une quelconque des revendications 1 à 6.

**14.** Support de stockage lisible par ordinateur, comprenant un programme informatique, dans lequel, quand le programme informatique est exécuté sur un ordinateur, l'ordinateur est capable de mettre en œuvre le procédé selon l'une quelconque des revendications 1 à 6.

FIG. 1

EP 4 195 662 B1

<u>200</u>

```
┌─────────────────────────────────────┐
│ Determine N color mapping parameters │        S210
│ corresponding to N standard light sources │
└─────────────────────────────────────┘

┌─────────────────────────────────────┐
│ Correct a second image based on at least one of │  S220
│ the N color mapping parameters       │
└─────────────────────────────────────┘
```

FIG. 2

300

S310   S320   S330

S340

First camera | Measure a spectral response → Obtain a first calibration image → White balance processing

Second camera | Measure a spectral response → Obtain a second calibration image → White balance processing

Calculate a first color mapping parameter

FIG. 3

400

First
camera

Second
camera

S410 — Measure a spectral response

S420 — Obtain a first calibration image

Measure a spectral response → Obtain a second calibration image

S430 — Calculate a second color mapping parameter

FIG. 4

500

First image

Second image

First color mapping parameter

S510 — Image matching

S520 — Calculate a white balance compensation parameter

S530 — Calculate a color compensation parameter

S540 — Color correction on the second image

Corrected image

FIG. 5

(a)

(b)

FIG. 6

700

Second color
mapping
parameter

First
image

S710

S720

S730

S740

Image
matching

Calculate a color
compensation
parameter

Calculate a white
balance compensation
parameter

Color correction
on the second
image

Corrected
image

Second
image

FIG. 7

Color consistency correction apparatus
800

Obtaining module
810

Determining module
820

Correction module
830

FIG. 8

Color consistency correction apparatus 900

Memory 910

Processor 920

Bus 940

Communications
interface 930

FIG. 9

**EP 4 195 662 B1**

**REFERENCES CITED IN THE DESCRIPTION**

**Patent documents cited in the description**

- CN 103796003 A
- CN 106131527 A
- CN 105979238 A
- US 2018308227 A